# EUROPÄISCHE PATENTSCHRIFT

(11) **EP 0 321 678 B1**
(45) Veröffentlichungstag und Bekanntmachung des Hinweises auf die Patenterteilung: **07.12.1994**
(21) Anmeldenummer: 88117916.2
(22) Anmeldetag: 27.10.1988
(51) Int. Cl.: B29C 45/28

(54) **Spritzgussdüse sowie Spritzgiesseinrichtung**
Injection nozzle and injection-moulding apparatus
Buse d'injection et dispositif de moulage d'injection

(30) Priorität: 10.12.1987 CH 4831/87
(43) Veröffentlichungstag der Anmeldung: 28.06.1989
(73) Patentinhaber: Otto Hofstetter AG, 8730 Uznach (CH)
(72) Erfinder: Fernandez, Luis, CH-8780 Uznach (CH); Hofstetter, Otto, CH-8780 Uznach (CH)
(74) Vertreter: Ritscher, Thomas, Dr.

(56) Entgegenhaltungen:
- EP-A- 0 279 400
- DE-A- 2 614 911
- DE-A- 3 237 924
- FR-A- 1 524 962
- FR-A- 2 333 633
- US-A- 4 412 807
- US-A- 4 712 995

## Beschreibung

Die vorliegende Erfindung betrifft eine Spritzgussdüse für die Herstellung von Formteilen aus thermoplastischem Material, insbesondere PET, mit einem Düsenzylinder, einem Düsenkopf mit einer Düsenöffnung und einem koaxial zum Düsenzylinder verschieblichen Düsenstock.

Aus der US-PS 4 213 751 ist eine Spritzgussdüse bekannt mit einer Düsenöffnung, einem mit dieser Öffnung kommunizierenden, axial ausgedehnten Düsenkanal und einem im Düsenkanal in Richtung seiner Achse zum Steuern des Gutauslasses verschieblichen Düsenstock, welche für die Herstellung von Rohlingen aus thermoplastischem Material ausgelegt ist, die anschliessend durch Blasen zu Kunststoffflaschen verarbeitet werden. Verfahrensmässig wird hier Spritzgut, im speziellen thermoplastisches Material, durch heiss gehaltene Zuführungen niederviskös dem koaxial zum Düsenstock angeordneten Düsenkanal zugeführt, indem eine entsprechende Zuführleitung, von der Düsenöffnung weit rückgestaffelt, an einer diskreten Umfangsstelle gegenüber dem freiliegenden Düsenstock, in den Düsenkanal einmündet.

Insbesondere, weil das Spritzgut bei rückgezogenem Düsenstock unter Druck eingespritzt wird, resultiert aus der Biegebeanspruchung des Stockes eine Verschiebung seiner dann freien Endpartie, was bei nachmaligen Vorschieben eine erhöhte Abnützung der Düsenöffnung bewirkt, da das ihr zugekehrte Ende des Düsenstockes mit ihr nicht mehr exakt fluchtet. Dabei bewirkt schon eine geringe Biegebeanspruchung des Stockes in rückgeholter Position, wegen dessen grosser freier Axiallänge im Kanal, eine nicht tolerierbare Auslenkung der Düsenstockspitze.

Die in der US-4,412,807 beschriebene Einspritzdüse weist einen Düsenstock auf, welcher in einer bis in den Mündungsbereich der Düsenspitze ragende Führungshülse geführt wird. Diese Führungshülse sitzt passgenau in der Düsenhülse und ist längs seiner Achse einseitig abgefräst derart, dass ein im Querschnitt kreisabschnittförmiger Förderkanal gebildet ist. Aufgabe dieser Konstruktion ist es den Materialstrom nicht zu teilen oder zu unterbrechen um im Spritzgussteil keine Verschmelzungsnaht entstehen zu lassen. Mit dieser Konstruktion können auch die mechanischen Vibrationen des Düsenstocks wirksam verhindert werden. Jedoch ist eine derart konstruierte Düse für die Verarbeitung von PET aus verschiedenen Gründen ungeeignet. Insbesondere weist die dargestellte Düse im Mündungsbereich der Führungshülse eine Nische auf, in welcher das geförderte Material hängen bleibt, sich zersetzt und/oder verbrennt. Dies wird insbesondere auch dadurch begünstigt, dass der kreisabschnittförmige Querschnitt des Förderkanals die Fördermenge pro Zeit - bei vorbestimmten Druckverhältnissen - erheblich reduziert.

Massnahmen zur Stabilisierung der Temperaturverhältnisse im Mündungsbereich sind nicht vorgesehen, was bei der Verarbeitung von PET zu den hinlänglich bekannten Problemen führt.

Die vorliegende Erfindung setzt sich zum Ziel den erwähnten Nachteil zu beheben, was durch eine Spritzgussdüse mit den Merkmalen des Anspruchs 1 erreicht wird. Um die durch das unter Druck eingespritze Spritzgut resultierenden Auslenkungen der Düsenstockspitze und die damit bewirkte erhöhte Abnutzung der Düsenöffnung zu verhindern, die Axialausdehnung des Düsenkanals wesentlich geringer ist als die Axialausdehnung des koaxialen Hohlraums, die Spritzgussdüse mit auf hohem Temperaturniveau betriebenen Einrichtungsteilen thermisch enger gekoppelt ist als mit auf tieferem Temperaturniveau betriebenen Einrichtungsteilen, die freie Länge des Düsenstockes zwischen dem freien Ende der Führungshülse und der Düsenöffnung von gleicher Grössenordnung ist wie dessen Durchmesser.

Dadurch, dass der Düsenstock bis unmittelbar vor die Düsenöffnung dichtend verschieblich gelagert wird und das Spritzgut unmittelbar vor der Düsenöffnung in den Düsenkanal mit dem beweglichen Stock gefördert wird, wird erreicht, dass die freie Länge des Düsenstockes auf das absolut Notwendige reduziert wird.

Um nun im weiteren, und in Anbetracht der bestehenden Gutzuspeisungen zu derartigen Düsen, konstruktiv einfach den erfindungsgemäss angestrebten Effekt zu erzielen, wird weiter vorgeschlagen, dass das Spritzgut von der Düsenöffnung rückgestaffelt erst parallel zur Düsenstockachse und vom Düsenstock getrennt vorgefördert wird. Dadurch ist es möglich, das Gut asymmetrisch an einer bestimmten Umfangsstelle bezüglich des Düsenstockumfanges einzubringen. Falls nun das Gut auch asymmetrisch in den Düsenkanal eingebracht wird, wird die freie Länge des Düsenstockes derart kurz gewählt, dass die resultierende Beanspruchung des Düsenstockes keine störende Auslenkung seiner Spitze bewirken kann.

Um die obgenannte Aufgabe zu lösen, zeichnet sich letztere dadurch aus, dass die freie Länge des Düsenstockes im Düsenöffnungsbereich von gleicher Grössenordnung wie dessen Durchmesser ist.

Eine erfindungsgemässe Spritzgiesseinrichtung mit einer derartigen erfindungsgemässen Spritzgussdüse zeichnet sich nach dem Wortlaut von Anspruch 3 aus.

Dadurch, dass an dieser Spritzgiesseinrichtung, bei der ein Formboden mit einer mit der Düsenöffnung der Düse fluchtenden Zuspeiseöffnung für Spritzgut vorgesehen ist, zwischen einem Düsenkopf der Düse und dem Formboden ein Ringspalt vorgesehen ist, wird erreicht, dass, bei erstmaligem Einsatz der Spritzgiesseinrichtung mit der genannten Düse, Spritzgut radial in diesen Ringspalt eintritt, dort aushärtet, womit einerseits, eine zusätzliche, optimal an den Düsenstock anliegende mechanische Dichtung, anderseits eine thermische Isolierung zwischen Düsenkopf und Formboden erzielt wird, was Wärmeverluste vom heiss zu haltenden Düsenkopf über den Formboden reduziert und ebenso ein Aufwärmen des Formbodens. Letzteres wiederum unterstützt die rasche Abkühlung eines gegossenen Werkstückes und verkürzt somit den Herstellungszyklus derartiger Werkstücke. Im weiteren wird an einer derartigen Spritzgiesseinrichtung vorgeschlagen, dass strukturelle Verbindungen zwischen Formboden und der Düse so erstellt werden, dass der Formboden thermisch schwach mit der Düse gekoppelt ist, wie über rostfreien Stahl, der bekanntlich eine wesentlich geringere thermische Leitfähigkeit aufweist als Stahl.

Insbesondere für die Verarbeitung thermoplastischer Giessmaterialien, wie von PET, ist es üblich, für die Spritzgutzuleitungsanordnung zur Düse eine Heizungsanordnung vorzusehen, um das Spritzgut auf seinem Weg zu einer oder mehreren der vorgesehenen Düsen niederviskös zu halten. Bei einer solchen Spritzgiesseinrichtung wird nun weiter vorgeschlagen, dass die Düse thermisch mit der Heizungsanordnung eng gekoppelt wird, wie durch eine Stahlverbindung, um entlang des Zuführweges durch die Einrichtung bis zur Düse hin eine möglichst gleichförmige Temperaturverteilung von Organen sicherzustellen, die mit dem Gut in Kontakt treten. Generell wird im weiteren vorgeschlagen, dass die Düse mit auf hohem Temperaturniveau betriebenen Einrichtungsteilen, wie Heizelementen für die Zuleitungsanordnung, thermisch enger gekoppelt ist als mit auf tieferem Temperaturniveau betriebenen Einrichtungsteilen, wie dem obgenannten Formboden.

Um an der Spritzgiesseinrichtung ein leichtes Auswechseln der Düse zu ermöglichen und entsprechend ein leichtes Wiedermontieren, wird weiter vorgeschlagen, dass die Düse in einer Aufnahme an der Einrichtung einschiebbar ist. Selbstverständlich wird die Düse nach entsprechendem Einschieben durch Vorsehen entsprechend verspannter Lager- und Widerlager starr fixiert.

Die Erfindung wird anschliessend beispielsweise anhand der Figuren erläutert.

Es zeigen:
Fig. 1 eine erfindungsgemässe Spritzgussdüse, schematisch im Längsschnitt dargestellt,
Fig. 2 eine Längsschnittdarstellung einer erfindungsgemässen Spritzgussdüse, eingebaut in eine erfindungsgemässe Spritzgiesseinrichtung.

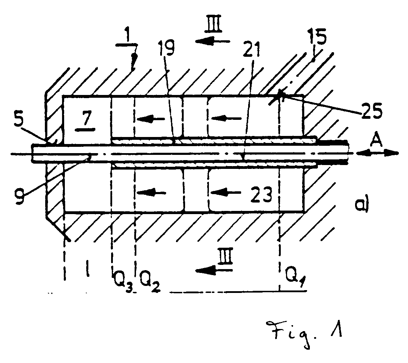

In Fig. 1 ist eine erfindungsgemässe Düse 1 dargestellt. Dabei wird davon ausgegangen, dass bestehende Spritzgiesseinrichtungen, mit Zuspeisungen zu den Düsenkanälen versehen sind, welche an einer diskreten Umfangspartie bezüglich des Düsenstockes "asymmetrisch" gegen die Düsenachse geführt werden. Abgesehen davon bringt die hier dargestellte Auführungsvariante noch weitere Vorteile, die noch zu erwähnen sein werden.

Koaxial zum Düsenstock 9 ist hier eine Führungshülse 19 vorgesehen, welche an ihrem, der Düsenöffnung 5 abgekehrten Ende verankert ist und in deren Bohrung 21, mindestens der Düsenöffnung 5 zugekehrt, der Düsenstock 9 dichtend beweglich geführt ist. Es stellt sich, während das Spritzgut achsparallel nach vorne fliesst, ein Druckausgleich ein, so dass sich die in der Querschnittsebene Q₁ im Einmündungsbereich der Leitung 25 ungleiche Druckverteilung p₁ gegen das Ende der Hülse 19 beispielsweise in der Querschnittsfläche Q₂, gleichförmig im Düsenraum verteilt.

Die Hülse 19 erstreckt sich hier frei ausladend von ihrem Verankerungsbereich hin zum Bereich der Düsenöffnung 5, womit eine Ringkammer 23 koaxial zu Hülse 19 und somit zum Düsenstock 9 gebildet wird.

Um die Stabilität der ausladenden Hülse 19 zu erhöhen, kann eine Stützanordnung mit Stützstegen vorgesehen sein.

Durch diese, erst achsparallele, nicht mit dem Düsenstock in Kontakt tretende Zuspeisung des Spritzgutes wird, als weiterer wesentlicher Vorteil, die axiale freie Länge L des Düsenstockes 9 wesentlich reduziert. Dadurch werden allenfalls noch verbleibende Druckunterschiede bzw. Beanspruchungsunterschiede auf dem Düsenstock 9 bzw. deren Auswirkungen noch mehr reduziert. Im weiteren ist es vorteilhaft, dass die Länge, entlang welcher der Düsenstock 9 mit dem Spritzgut in direkten Kontakt tritt, wesentlich reduziert wird, was die Reibkräfte zur Betätigung des Düsenstockes 9 entsprechend reduziert. Zusätzlich ergibt diese Kontaktzone reduzierter Länge einen schlechteren Wärmeübergang zwischen Spritzgut und dem jenseits der Düsenöffnung 5 mit kälterer Umgebung kommunizierenden Düsenstock 9, was einerseits den Wärmefluss und damit die Wärmeverluste vom Spritzgut über Düsenstock 9 nach aussen, anderseits eine Abkühlung des Spritzgutes im Düsenkanal 7 reduziert und damit die Gefahr, dass dort das Spritzgut unzulässig stark viskös wird, bei geschlossener Düsenöffnung 5.

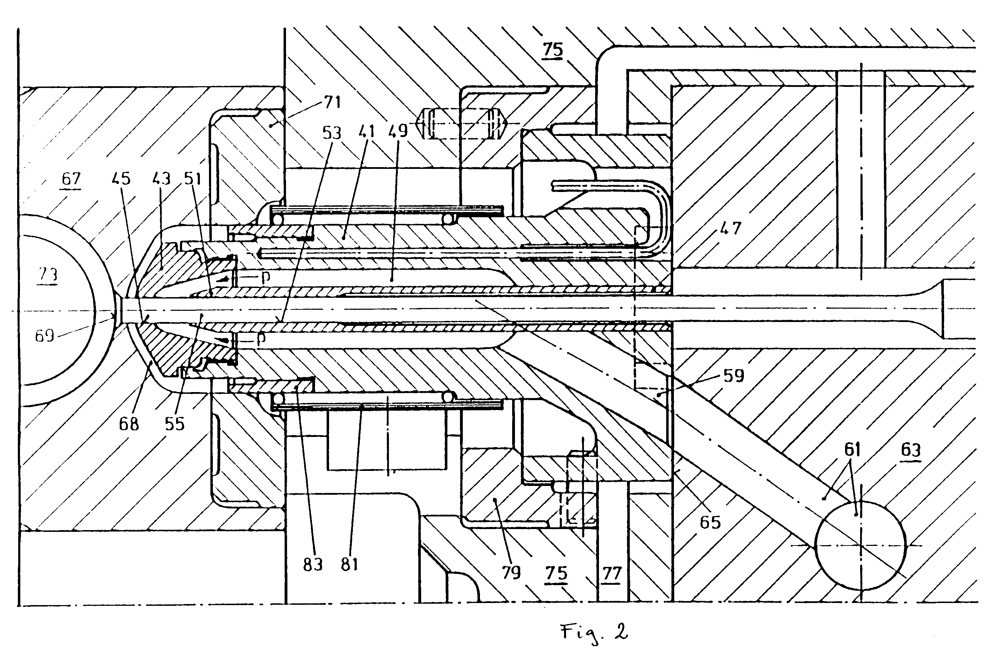

In Fig. 2 ist an einem Ausschnitt einer erfindungsgemässen Spritzgiesseinrichtung in Längsschnittdarstellung eine prinzipiell gemäss Fig. 4 aufgebaute erfindungsgemässe Spritzgussdüse dargestellt. Stirnseitig ist auf einem Düsenzylinder 41 ein Düsenkopf 43 mit Düsenöffnung 45 dichtend montiert. An dem dem Düsenkopf 43 abgekehrten Ende des Düsenzylinders 41 ist eine Führungshülse 47 montiert und ragt, durch einen durch den Düsenzylinder 41 definierten, zur Düsenöffnung 45 koaxialen Hohlraum 49, mit einem sich konisch verjüngenden Ende 51, in den Bereich der Düsenöffnung 45.

In der Bohrung 53 der Hülse 47 reitet, längsverschieblich, der Düsenstock 55 und ist, an einem der Düsenöffnung 45 zugewandten Bereich der Hülse 47, darin dichtend geführt. Zur Reduktion des bei der Verschiebung des Düsenstockes zu überwindenden Reibwiderstandes ist die Bedingung der Dichtheit an einem bezüglich des Endes 51 der Hülse 47 rückgestaffelten Bereich der Bohrung 53 aufgehoben, worin der Düsenstock 55 lediglich mehr axial verschieblich mechanisch gelagert ist.

Zwischen der Hülse 47 und dem Düsenzylinder 41 wird die Ringverteilkammer 23 definiert, in welche, an dem der Düsenöffnung 45 abgelegenen Ende, eine Zuspeiseleitung 59 für das Spritzgut unter Druck einmündet. Die Zuführleitung 59 wird insbesondere bei einer Spritzgiesseinrichtung mit zwei oder mehr Spritzdüsen aus einem Spritzgut-Verteilsystem 61 beschickt, welches durch einen in bekannter Art und Weise heissen Block 63 verläuft. Der Düsenzylinder 41 ist durch Anschmiegen an der Fläche 65 eng mit dem heissen Block 63 gekoppelt und aus thermisch gut leitendem Material, wie aus Stahl, gefertigt. Dies sichert im thermisch eingeschwungenen Zustand, dass auch im Bereich des Düsenkopfes 43 noch eine nur wenig von der Temperatur des Blockes 63 abweichende Termperatur vorherrscht.

Stirnseitig des Düsenkopfes 43 ist ein Formboden 67 vorgesehen, mit einer Zuspeiseöffnung 69, welche mit der Düsenöffnung 45 fluchtet. Zwischen Düsenkopf 43 und Formboden 67 ist ein Ringspalt 68 vorgesehen, der mit der Verbindung zwischen Düsenöffnung 45 und Zuspeiseöffnung 69 kommuniziert. Der Formboden 67 ist über die Ringkammer 68 sowie thermisch schlecht leitende Verbindungsteile 71 und 83, wie aus rostfreiem Stahl, thermisch nun schwach mit Düsenkopf 43 und Düsenzylinder 41 gekoppelt, so dass, wie erwähnt, ein nur relativ geringer Wärmefluss vom heissen Düsenkopf/Düsenzylinder über den Formboden 67 zu einer Formzone 73, in welcher ein zu giessendes Werkstück erstellt wird, hier der Rohling für nachmals zu blasende Kunststoffflaschen aus einem thermoplastischen Material, erfolgt.

Der heisse Block 63 ist an einer gekühlten Blockplatte 75 montiert, abschnittsweise durch Luftzwischenräume 77 davon isoliert, dies, um Wärmeverluste des heissen Blockes 63 in die Umgebung möglichst zu minimialisieren. Bezüglich dieser gekühlten Blockplatte 75 ist die Düse mit Düsenzylinder 41 ebenfalls thermisch schwach gekoppelt und hierzu mittels thermisch schlecht leitender Übergänge, wie mit Verbindungsteilen 79 aus rostfreiem Stahl als thermisch schlecht leitendes Material, damit verbunden.

Zur Sicherstellung der Düsentemperatur und leichter Montage und Demontage der Düse mit dem Düsenzylinder 41 ist an der gekühlten Platte 75 eine Montagebohrung mit auch als Montagehülse wirkender Heizung 81 vorgesehen, womit die Düse mit dem Düsenzylinder 41 gemäss Darstellung von Fig. 5 von rechts eingeschoben werden kann. Darauf wird der Formboden 67 über die thermisch schlecht leitenden Teile 71 und 83 montiert und schliesslich, als Widerlager, der heisse Block 63, wie durch Verschrauben.

Im Betrieb wird das niedervisköse Spritzgut, wie ein thermoplastisches Material, aus dem Leitungssystem 61 im heissen Block 63 exzentrisch durch die Zuführung 59 der Verteilkammer 23 zugespiesen, fliesst darin achsparallel zur Achse des Düsenstockes 55 gegen und in den Düsenkanal 7, der unmittelbar im Bereich der Düsenöffnung 45 liegt. Seine Längsausdehnung liegt im Bereich der Durchmesserausdehnung der Ventilstockes 55 im Kanal und ist wesentlich geringer als die Axialausdehnung der Verteilkammer 23.

Das Spritzgut tritt mit rundum gleichem Druck p mit dem Düsenstock 55 im Düsenkanal 7 in Kontakt und wird, bei rückgezogenem Düsenstock 55, durch die Zuführöffnung 69 in die Formzone 73 des Formbodens 67 eingespritzt. Dabei füllt sich die Ringkammer 68 beim erstmaligen Einsatz der Düse mit dem Spritzgut auf, was insbesondere eine zusätzliche thermische Isolierung zwischen Formboden 67 und Düse bewirkt.

Diese geringe Axialausdehnung des Düsenkanals 7, worin das Spritzgut mit dem Düsenstock in Kontakt tritt, sichert, wie erwähnt, einen nur geringen thermischen Übergang zwischen Spritzgut und Düsenstock 55 und somit einen nur geringen Wärmefluss, bei verschlossener Düsenöffnung 45, vom Spritzgut im Düsenkanal 7 in die Umgebung, entsprechend der Formzone 73, was wiederum einer Erhöhung der Viskosität des Spritzgutes im Düsenkanal 7 entgegenwirkt.

Dies wiederum reduziert den Reibungswiderstand, der beim Rückholen des Düsenstockes 55 zu überwinden ist, und verhindert, dass bei der Ausgabe des Spritzgutes zu Beginn ein höher visköser Spitzgutpfropfen auszupressen ist, dies obwohl, mit der geringen Spritzgutmenge im kleinvolumigen Düsenkanal 7, die Wärmekapazität des Spritzgutes im Düsenkanal 7 relativ klein ist.

## Patentansprüche

1. Spritzgussdüse (1; 41, 43, 47, 55) für die Herstellung von Formteilen aus thermoplastischem Material, insbesondere PET, mit einem Düsenzylinder (41), einem Düsenkopf (43) mit einer Düsenöffnung (45) und einem koaxial zum Düsenzylinder (41) verschieblichen Düsenstock (55) gekennzeichnet durch eine Führungshülse (47) für diesen Düsenstock (55), welche Führungshülse (47) an ihrem der Düsenöffnung (45) abgekehrten Ende gehaltert ist, und welcher Düsenstock (55) in dieser Führungshülse (47) dichtend verschieblich ist, sowie mit einer asymmetrisch angeordneten Zuführung (59) für Spritzgut, welche Spritzgussdüse (1; 41, 43, 47, 55) in ihrem Innenraum, zwischen der Düsenöffnung (45) und dem freien Ende der Führungshülse (47) einen Düsenkanal (7) und zwischen dem freien Ende der Führungshülse (47) und dem verankerten Ende dieser Hülse einen koaxialen Hohlraum (49) bildet, wobei die Axialausdehnung des Düsenkanals (7) wesentlich geringer ist als die Axialausdehnung des koaxialen Hohlraums (49), die freie Länge des Düsenstockes (55) zwischen dem freien Ende der Führungshülse (47) und der Düsenöffnung (45) von gleicher Grössenordnung ist wie dessen Durchmesser, welcher Düsenzylinder (41) aus thermisch gut leitendem Material gefertigt ist und mit thermisch schlecht leitenden Verbindungsteilen (83, 71 u. 79) verbunden ist.

2. Spritzgussdüse nach Anspruch 1 oder 2, dadurch gekennzeichnet, dass zur Reduktion des Reibungswiderstandes der Düsenstock (55) lediglich an einer düsenkanalseitigen Endzone dichtend geführt ist.

3. Spritzgiesseinrichtung mit mindestens einer Spritzgussdüse nach Anspruch 1, und einer mit einer Heizungsanordnung (63) versehenen Zuleitungsanordnung (61) für das Spritzgut zur Spritzgussdüse, sowie einem Formboden (67) mit einer mit der Düsenöffnung (45) fluchtenden Zuspeiseöffnung (69), dadurch gekennzeichnet, dass zwischen einem Düsenkopf (43) der Spritzgussdüse und dem Formboden (67) ein mit einer Verbindung von Düsenöffnung (45) zur Zuspeiseöffnung (69) kommunizierenden Ringspalt (68) vorgesehen ist, der Formboden (67) thermisch schwach mit der Spritzgussdüse gekoppelt ist, für die Zuleitungsanordnung (61) eine Heizungsanordnung (63) vorgesehen ist und die Spritzgussdüse thermisch mit der Heizungsanordnung (63) eng gekoppelt ist.

## Claims

1. Injection moulding nozzle (1; 41, 43, 47, 55) for the production of mouldings of thermoplastic material, in particular PET, having a nozzle cylinder (41), a heater head (43) with a nozzle orifice (45) and a plunger (55) which is displaceable coaxially with the nozzle cylinder (41), characterized by a guide sleeve (47) for this plunger (55), which guide sleeve (47) is held at its end further away from the nozzle orifice (45), and which plunger (55) is displaceable with a sealing action in this guide sleeve (47), and having an asymmetrically arranged feed (59) for injected material, which injection moulding nozzle (1; 41, 43, 47, 55) forms, in its interior, a nozzle channel (7) between the nozzle orifice (45) and the free end of the guide sleeve (47) and a coaxial cavity (49) between the free end of the guide sleeve (47) and the anchored end of this sleeve, the axial dimension of the nozzle channel (7) being substantially smaller than the axial dimension of the coaxial cavity (49), the free length of the plunger (55) between the free end of the guide sleeve (47) and the nozzle orifice (45) being of the same order of magnitude as its diameter, which nozzle cylinder (41) is made of material having good thermal conductivity and is connected with connecting parts (83, 71 and 79) having poor thermal conductivity.

2. Injection moulding nozzle according to Claim 1 or 2, characterized in that, in order to reduce the frictional resistance, the plunger (55) is guided with a sealing action only in an end zone towards the nozzle channel.

3. Injection moulding means having at least one injection moulding nozzle according to Claim 1, and a feed line arrangement (61) provided with a heating arrangement (63) and intended for feeding the injected material to the injection moulding nozzle, and having a mould base (67) with a feed orifice (69) flush with the nozzle orifice (45), characterized in that an annular gap (68) communicating with the connection from nozzle orifice (45) to feed orifice (69) is provided between a heater head (43) of the injection moulding nozzle and the mould base (67), the mould base (67) is thermally weakly coupled to the injection moulding nozzle, a heating arrangement (63) is provided for the feed line arrangement (61) and the injection moulding nozzle is thermally closely coupled to the heating arrangement (63).

## Revendications

1. Filière de moulage par injection (1, 41, 43, 47, 55) pour la fabrication de pièces préformées en matière thermoplastique, en particulier en PET, comprenant un corps de filière (41), une tête de filière (43) avec un orifice (45), et un poinçon (55) susceptible d'être coulissé coaxialement par rapport au corps de filière (41), caractérisée par une douille de guidage (47) pour ledit poinçon (55), ladite douille de guidage (47) étant maintenue par son extrémité opposée à l'orifice (45) de la filière, ledit poinçon (55) pouvant être coulissé de manière étanche dans ladite douille de guidage (47), et par une alimentation (59) en matière d'injection disposée assymétriquement, ladite filière (1, 41, 43, 47, 55) comprenant, dans sa chambre intérieure, un canal d'injection (7) situé entre l'orifice (45) de la filière et l'extrémité libre de la douille de guidage (47) et l'extrémité par laquelle cette douille est maintenue, la dimension en direction axiale dudit canal d'injection (7) étant sensiblement plus faible que la dimension en direction axiale de la chambre coaxiale (49), l'extrémité libre du poinçon (55) qui s'étend entre l'extrémité libre de la douille de guidage (47) et l'orifice (45) de la filière étant du même ordre de grandeur que son diamètre, ledit corps de cylindre (41) étant réalisé en un matériau bon conducteur de la chaleur et étant relié à des pièces de liaisons (83, 71 et 79) qui conduisent mal la chaleur.

2. Filière selon la revendication 1, caractérisée en ce que le poinçon (55) est guidé de manière étanche uniquement au niveau de son extrémité située du côté du canal d'injection.

3. Installation de moulage par injection comprenant au moins une filière d'injection selon la revendication 1, et un dispositif d'alimentation (61) destiné à amener de la matière d'injection aux filières et pourvu d'un dispositif de chauffage (63), tout comme un moule de formes (67) présentant un orifice d'alimentation (69) aligné avec l'orifice (45) de la filière, caractérisée en ce qu'un espace annulaire (68) est prévu entre la tête (43) de la filière et le moule de formes (67), ledit espace annulaire (68) communiquant avec une liaison allant de l'orifice (45) de la filière à l'orifice d'alimentation (69), que le moule de formes et la filière d'injection forment une liaison thermiquement faible, qu'un dispositif de chauffage (63) est prévu pour le dispositif d'alimentation (61), et que la filière d'injection est accouplée au dispositif de chauffage (63) de manière à former une liaison thermiquement étroite.
